# EUROPÄISCHE PATENTSCHRIFT

(11) **EP 3 168 273 B1**
(45) Veröffentlichungstag und Bekanntmachung des Hinweises auf die Patenterteilung: **23.05.2018**
(21) Anmeldenummer: 15194027.7
(22) Anmeldetag: 11.11.2015
(51) Int. Cl.: C09D 183/06, C08G 77/08, C08G 77/38

(54) **HÄRTBARE POLYMERE**
CURABLE POLYMERS
POLYMERE DURCISSABLE

(43) Veröffentlichungstag der Anmeldung: 17.05.2017
(73) Patentinhaber: Evonik Degussa GmbH, 45128 Essen (DE)
(72) Erfinder: AMAJJAHE, Sadik, 40591 Düsseldorf (DE); HENNING, Frauke, 45259 Essen (DE); KNOTT, Wilfried, 45355 Essen (DE); DUDZIK, Horst, 45326 Essen (DE); PLATTE, Gabriele, 44581 Castrop-Rauxel (DE); GABER, Florian, 45472 Mülheim an der Ruhr (DE); DOEHLER, Hardi, 45145 Essen (DE)

(56) Entgegenhaltungen:
- WO-A2-01/77240

## Beschreibung

Die Erfindung liegt auf dem Gebiet der Polymere, vorzugsweise der Polysiloxane. Sie betrifft insbesondere die Herstellung von (meth)acrylattragenden Polysiloxanen und deren Anwendung für strahlenhärtende Beschichtungen.

Epoxide sind sehr vielseitige Synthesebausteine in der organischen und makromolekularen Chemie. Die große Ringspannung der Epoxide (>20 kcal/mol) ist verantwortlich für ihre gute Reaktivität gegenüber Nukleophilen (Ringöffnung) und erlaubt so den Zugang zu einer Reihe von interessanten Strukturen. Neben Aminen, Mercaptanen und Alkoholen finden besonders Carbonsäuren Anwendung als Nukleophile, da diese Stoffklasse sich vielfach durch einen günstigen Zugang auszeichnet. Hierbei ist aber sehr häufig der Einsatz von Katalysatoren notwendig, da Carbonsäuren eine geringere Nukleophilie ausweisen als beispielsweise die entsprechenden Amine.

Neben monomeren Epoxiden wie beispielsweise Glycidylacrylat oder Butylglycidylether sind polymere Epoxide wie unter anderem Polyglycidylverbindungen vom Bisphenol-A Typ, epoxyfunktionelle Polymerisate von Vinylmonomeren, aber auch Epoxysiloxane unabdingbar für Materialwissenschaft und Industrie.

Polysiloxane, die Acrylsäureestergruppen (Acrylatgruppen) enthalten, haben sich als unter energiereicher Strahlung härtbare Additive, z. B. für Druckfarben und zur Herstellung von Lackbindemitteln oder für Beschichtungsmittel für Kunststoff-, Papier-, Holz- und Metalloberflächen, bisher bewährt. Die Härtung erfolgt bevorzugt bei niedrigen Temperaturen und wird durch Elektronenstrahlung oder durch UV-Strahlung in Gegenwart von Photoinitiatoren des Standes der Technik, wie z. B. Benzophenon und seinen Derivate induziert (EP 1897917).

Zur Epoxidringöffnung durch Säuren eignen sich eine Reihe von Katalysatoren. So sind aus der Beschichtungstechnologie verschiedenste Katalysatoren für die Reaktion von Glycidylverbindungen mit Carbonsäuren bekannt. Diese Reaktion wird beispielsweise häufig als Vernetzungsreaktion zur Aushärtung von Lacken verwendet. Neben Ammonium- und Phosphoniumsalzen bzw. Aminen und Phosphinen sind weiterhin bestimmte Metallverbindungen beschrieben. Diese im Stand der Technik bekannten Katalysatoren erweisen sich häufig als unselektiv und damit als nachteilig, da sie in der Lage sind, Bindungen in beispielsweise Silikonketten zu spalten und damit unerwünschte Nebenreaktionen wie Molmassenabbau oder Gerüstumlagerung bewirken. Des Weiteren können diese Katalysatoren auch an den silikongebundenen organischen Gruppen unerwünschte Nebenreaktionen auslösen, wie etwa die Homopolymerisation von Epoxygruppen, die Umsetzung von Carbonsäuren in Amide oder Michael-Additionen von Aminen an Acrylatgruppen oder auch die radikalische Homopolymerisation von Acrylaten, die durch Redoxreaktion mit einer Vielzahl von Metallverbindungen ausgelöst werden kann.

In Mol Divers (2013) 17; 9 - 18 wird der Einsatz von ionischen Flüssigkeiten wie Butylmethylimidazoliumbromid als Katalysator zur Ringöffnung von Epoxiden mit aliphatischen und aromatischen Säuren beschrieben. Dieser Katalysator setzt während der Reaktion die starke Säure HBr frei, so dass säurelabile Polymere wie Siloxane nicht umgesetzt werden können.
EP 1693359 beschreibt die Katalyse mit bestimmten schwach lewissauren Boranverbindungen wie beispielsweise Trisdimethylaminoboran. Mit einem Flammpunkt von -20 °C ist die Handhabung erschwert, so dass die Reaktion bei 70 °C durchgeführt wird und zu langen Reaktionszeiten führt.
WO 0177240 beschreibt den Einsatz von Chromsalzen zur Ringöffnung von epoxidierten Siloxanen mit Acrylsäure und anschließendem Einsatz dieser Materialien in UV-härtbaren Trennbeschichtungen. Hierbei kommen verschiedene Lösemittel zum Einsatz, die eine bessere Durchmischung des Katalysators mit dem Epoxysiloxan gewährleisten sollen.
Aufgabe der vorliegenden Erfindung war es, die Bereitstellung eines ökonomischen Herstellungsverfahrens für Polymere, insbesondere (meth)acrylatgruppentragende Polymere zu ermöglichen.
Diese Aufgabe wird gelöst vom Gegenstand der Erfindung. Dabei handelt es sich um ein Verfahren zur Herstellung von Polymermassen (P), vorzugsweise Polysiloxanen mit mindestens einer Carbonsäureestergruppe, insbesondere (meth)acrylattragenden Polysiloxanen, wobei das Verfahren in Gegenwart von Umsetzungsprodukten (U) aus (A) und (B) durchgeführt wird, wobei (A) Metallsalze umfassend Chromsalze sind sind und (B) ein Reaktionsprodukt aus Aldehyden und primären Aminen ist. Sowohl die Bildung des Umsetzungsproduktes (U), als auch die Bildung des Reaktionsproduktes aus Aldehyden und primären Aminen zur Komponente (B) können gewünschtenfalls in situ erfolgen. Die Gesamtreaktion kann also so durchgeführt werden, dass im Verlauf eine oder mehrere Reagenzien entstehen, die in der selben Mischung weiter umgesetzt werden, z.B. kann zuerst die Komponente (B) gebildet werden, die in der selben Mischung mit (A) weiter umgesetzt wird zu (U), in dessen Gegenwart dann die Herstellung von (P) erfolgen kann.
Die Bezeichnung "(meth)acrylat" umfasst die Derivate, insbesondere Ester, der Methacrylsäure und/oder der Acrylsäure.
Dieses Verfahren ermöglicht eine besonders ökonomische Herstellung von Polymeren. Ein besonderer Vorteil des erfindungsgemäßen Verfahrens besteht darin, dass weniger oder gar kein Lösemittel eingesetzt werden muss. Dies führt zu einer Erhöhung der Raum-Zeit Ausbeute. Ein weiterer Vorteil des erfindungsgemäßen Verfahrens besteht darin, dass die Destillationszeit reduziert werden kann. Ein weiterer Vorteil des erfindungsgemäßen Verfahrens besteht darin, dass die eingesetzte Menge an Metallsalz, insbesondere die Menge an Chromsalz, reduziert werden kann. Ein weiterer Vorteil des erfindungsgemäßen Verfahrens besteht darin, dass eine Reduktion der Filtrationszeit erzielt werden kann. Insgesamt ergibt sich in jedem Fall eine ökonomischere Herstellung von Polymeren.
Das erfindungsgemäße Verfahren, die erfindungsgemäßen Polymere und mit diesen erhältliche Zubereitungen sowie deren Verwendung werden nachfolgend beispielhaft beschrieben, ohne dass die Erfindung auf diese beispielhaften Ausführungsformen beschränkt sein soll. Werden nachfolgend %-Angaben gemacht, so handelt es sich, wenn nicht anders angegeben, um Angaben in Gewichts-%. Bei Zusammensetzungen beziehen sich die %-Angaben wenn nicht anders angegeben auf die Gesamtzusammensetzung. Werden nachfolgend Mittelwerte angegeben, so handelt es sich, wenn nicht anders angegeben um Zahlenmittel. Werden Molmassen verwendet, handelt es sich, wenn nicht ausdrücklich anders vermerkt um gewichtsmittlere Molmassen Mw. Werden im Umfang dieser Erfindung Werte für Viskositäten angegeben, handelt es sich falls nicht anders vermerkt um dynamische Viskositäten, die mit dem Fachmann geläufigen Methoden ermittelt werden können. Werden nachfolgend Messwerte angegeben, so wurden diese Messwerte, wenn nicht anders angegeben, bei einem Druck von 101325 Pa und einer Temperatur von 23°C ermittelt.

Gemäß der Erfindung zeichnet sich das erfindungsgemäße Verfahren dadurch aus, dass mindestens ein Epoxygruppen-tragendes Polymer, vorzugsweise Polysiloxan, mit einer oder mehreren Carbonsäuren, insbesondere umfassend Acryl- und/oder Methacrylsäure und/oder andere Monocarbonsäuren, welche vorzugsweise frei von zur Polymerisation befähigten Doppelbindungen sind, umgesetzt wird.
Die über das erfindungsgemäße Verfahren herstellbaren Polymere zeichnen sich also dadurch aus, dass sie mindestens eine Carbonsäureestergruppe enthalten. Vorzugsweise sind die erfindungsgemäß resultierenden Polymere (Poly-)Siloxane. Insbesondere ermöglicht das erfindungsgemäße Verfahren die Bereitstellung von (meth)acrylattragenden (Poly-)Siloxanen gemäß Formel (I)

M¹ₐ₁M²_{a2M}³ₐ₃D¹_{b1}D²_{b2}D³_{b3}T_{c}Q_{d} (I)

mit
M¹ = [R¹₃SiO_{1/2}]
M² = [R²R¹₂SiO_{1/2]}
M³ = [R³R¹₂SiO_{1/2}]
D¹ = [R¹₂SiO_{2/2}]
D² = [R¹R²SiO_{2/2}]
D³ = [R¹R³SiO_{2/2}]
T = [R¹SiO_{3/2}]
Q = [SiO_{4/2}]
wobei
- a1: 0 bis 50, bevorzugt <10, insbesondere 2;
- a2: 0 bis 50, bevorzugt <10, insbesondere 0;
- a3: 0 bis 50, bevorzugt 1-30, insbesondere >0;
- b1: 10 bis 5000, bevorzugt 10 bis 1000, insbesondere 10 bis 500;
- b2: 0 bis 50, bevorzugt 0 bis 25, insbesondere 0;
- b3: 0 bis 50, bevorzugt 0 bis 25, insbesondere >0;
- c: 0 bis 50, bevorzugt 0 bis 10, insbesondere 0;
- d: 0 bis 50, bevorzugt 0 bis 10, insbesondere 0;
mit der Maßgabe, dass mindestens einer der Indices a3 und b3 größer 0, vorzugsweise größer 1 ist;
- R¹ =: unabhängig voneinander gleiche oder verschiedene lineare oder verzweigte, gesättigte oder ungesättigte Kohlenwasserstoffreste mit 1 bis 30 Kohlenstoffatomen oder aromatische Kohlenwasserstoffreste mit 6 bis 30 Kohlenstoffatomen, bevorzugt Alkylreste mit 1 bis 14 Kohlenstoffatomen oder monocylische Aromaten, weiterhin bevorzugt Methyl, Ethyl, Propyl oder Phenyl, insbesondere Methyl;
- R² =: unabhängig voneinander gleiche oder verschiedene lineare oder verzweigte, gesättigte oder ungesättigte Kohlenwasserstoffreste, welche mit Stickstoff- oder Sauerstoffatomen substituiert sein können, bevorzugte Kohlenwasserstoffe sind Alkylreste mit 1 bis 30 Kohlenstoffatomen,
die mit ein oder mehreren Hydroxyfunktionen und oder stickstofftragenden Gruppen substituiert sein können,
wobei die stickstofftragenden Gruppen in quaternärer Form als Ammoniumgruppen vorliegen können,
die mit einer Epoxidgruppe substituiert sein können,
und/oder die mit ein oder mehreren Carboxyl-, Aminosäure-, und/oder Betaingruppen substituiert sein können,
oder R² ist ein Arylrest mit 6 bis 30 Kohlenstoffatomen
oder R² ist ein Polyoxyalkylenrest der Formel (IV), 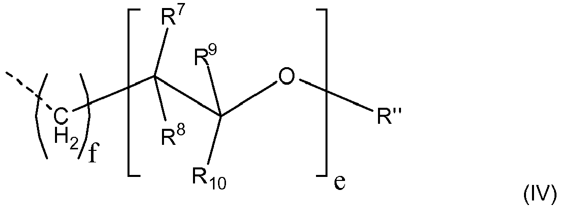
worin
e gleich 1 bis 150, bevorzugt 2 bis 100, mehr bevorzugt größer 2, insbesondere 3 bis 20 ist,
f gleich 0 oder 1 ist,
R⁷ oder R⁸, sowie R⁹ oder R¹⁰ gleich oder auch unabhängig voneinander Wasserstoff, einwertige Alkylreste mit 1 bis 12 Kohlenstoffatomen und/oder Arylreste mit 6 bis 12 Kohlenstoffatomen sind,
welche gegebenenfalls auch weiter mit Hydroxy-, Methoxy-, Ethoxy-, Methyl- und/oder Ethylgruppen substituiert sein können,
   oder R⁷ und R⁹, sowie unabhängig davon R⁸ und R¹⁰ können gemeinsam einen Ring bilden, der die Atome an die R⁷ und R⁹, sowie R⁸ und R¹⁰ gebunden sind, einschließt,
   oder R⁷ und R⁸ sowie unabhängig davon R⁹ und R¹⁰ können gemeinsam einen Ring bilden, der die Atome an die R⁷ und R⁸ sowie R⁹ und R¹⁰ gebunden sind, einschließt,
   wobei diese Ringe gegebenenfalls auch weiter mit Hydroxy-, Methoxy-, Ethoxy-, Methyl- und/oder Ethylgruppen substituiert sein können und/oder gesättigt und/oder ungesättigt sein können,
   wobei die einzelnen Fragmente mit dem Index e innerhalb des Polyoxyalkylenrests der Formel (IV) untereinander verschieden vorliegen können und dabei statistisch verteilt sind,
bevorzugt ist R²
-CH₂-CH₂-CH₂-O-(CH₂-CH₂O-)ₓ-(CH₂-CH(R^{I})O-)_{y}-R^{II},
-CH₂-CH₂-O-(CH₂-CH₂O-)ₓ-(CH₂-CH(R^{I})O-)_{y}-R^{II},
-CH₂-CH₂-CH₂-O-CH₂-CH(OH)-CH₂OH,
-CH₂-CH₂-(O)_{x'}-CH₂-R^{IV}, -CH₂-R^{IV}, oder
-CH₂-CH₂-CH₂-O-CH₂-C(CH₂OH)₂-CH₂-CH₃,
worin
- x: 0 bis 100, vorzugsweise > 0, insbesondere 1 bis 50,
- x': 0 oder 1,
- y: 0 bis 100, vorzugsweise > 0, insbesondere 1 bis 50,
bevorzugt sind x + y gleich 1 bis 50, mehr bevorzugt größer 1, insbesondere 2 bis 20,
R^{II} unabhängig voneinander Wasserstoffrest, substituiertes oder unsubstituiertes C₁-C₄-Alkyl, -C(O)NH-R^{I},-C(O)O-R^{I}, -C(O)-R^{III} mit
R^{III} substituierte oder unsubstituierte C₁-C₁₂-Alkyl -CH₂-O-R^{I}, substituierte oder unsubstituierte C₆-C₁₂-Arylgruppe
bevorzugt eine Benzylgruppe, bedeutet,
R¹ unabhängig voneinander substituierte oder unsubstituierte C₁-C₁₂-Alkyl, substituierte oder unsubstituierte C₆-C₁₂-Arylgruppe, substituierte oder unsubstituierte C₆-C₃₀-Alkaryl, und
R^{IV} C₁-C₅₀-Alkyl, cyclisches C₃-C₅₀-Alkyl,
vorzugsweise C₉-C₄₅-Alkyl, cyclisches C₉-C₄₅-
bevorzugt C₁₃-C₃₇-Alkyl, cyclisches C₁₃-C₃₇-Alkyl,
- R³ =: unabhängig voneinander gleiche oder verschiedene Reste der Formel (II) 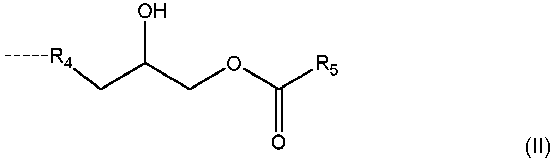 worin
R⁴ ein an das Siloxan gebundener, zweiwertiger, beliebiger organischer Rest,
bevorzugt substituiertes oder unsubstituiertes C₁-C₃₀-Alkylen, welches auch durch Heteroatome unterbrochen sein kann und im Falle der Unterbrechung durch Stickstoff kann dieser auch quaternisiert sein, cyclisches C₃-C₃₀-Alkylen, substituiertes oder unsubstituiertes C₁-C₃₀-Alkylenoxy, substituiertes oder unsubstituiertes C₆-C₃₀-Arylen, substituiertes oder unsubstituiertes C₆-C₃₀-Arylenoxy, substituiertes oder unsubstituiertes C₁-C₁₂-Alken- C₆-C₁₂-Arylen, welches auch durch Heteroatome unterbrochen sein kann und im Falle der Unterbrechung durch Stickstoff kann dieser auch quaternisiert sein, und Sulfate, Chloride und Carboxylate, insbesondere Citrate, Lactate, Stearate und Acetate als Gegenionen tragen,
R⁵ Wasserstoff, substituiertes oder unsubstituiertes C₁-C₃₀-Alkyl, substituiertes oder unsubstituiertes C₁-C₃₀-Alkyl mit einer und/oder mehreren Dreifachbindungen, substituiertes oder unsubstituiertes C₁-C₃₀-Alkyl mit einer und/oder mehreren Doppelbindungen, substituiertes oder unsubstituiertes C₆-C₃₀-Aryl, substituiertes oder unsubstituiertes C₆-C₃₀-Heteroaryl, substituiertes oder unsubstituiertes C₁-C₁₂-Alk- C₆-C₁₂-Aryl, substituiertes oder unsubstituiertes C₁-C₃₀-Alkyloxy, substituiertes oder unsubstituiertes cyclisches C₃-C₃₀-Alkyl,
vorzugsweise Methyl, Vinyl und/oder 1-Methylvinyl.

Es kann vorteilhaft sein, wenn in den erfindungsgemäß herzustellenden Polymere gemäß Formel (I) a3 = 2 und b3 = 0 ist.

In einer weiteren bevorzugten Ausführungsform der Erfindung sind die Indices der Formel (I) wie folgt festgelegt: a1 = 2, a2 = 0, a3 = 0, b1 = 10 - 500, b2 = 0, b3 = 3 - 25, c = 0 und d = 0.

Besonders bevorzugt sind als erfindungsgemäßen Polymere der Formel (I) lineare Polysiloxane (c und d = 0), und zwar bevorzugt solche, die terminal (meth)acrylsubstituiert sind. Sie entsprechen Formel (I) mit den Indices a1=0, a2=0, a3=2, b1=10-500, b2=0, b3=0, c=0 und d=0.

Besonders bevorzugte erfindungsgemäße Polymere sind solche der Formel (I), bei denen a3 = 0, b3 = 2-10, c und d = 0, R⁴ ein Propyloxy-Rest, R⁵ ein Vinyl-Rest.

Die verschiedenen Fragmente der in der Formel (I) angegebenen Siloxanketten können statistisch verteilt oder blockweise angeordnet sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden. Die in den Formeln (I) und (IV) verwendeten Indices sind als numerische Mittelwerte der genannten statistischen Verteilungen zu betrachten.

Wo immer Moleküle beziehungsweise Molekülfragmente ein oder mehrere Stereozentren aufweisen oder aufgrund von Symmetrien in Isomere unterschieden werden können oder aufgrund anderer Effekte z.B. eingeschränkter Rotation in Isomere unterschieden werden können, sind alle möglichen Isomere von der vorliegenden Erfindung mit eingeschlossen.

Isomere sind dem Fachmann bekannt. Sofern im Umfang dieser Erfindung auf Naturstoffe Bezug genommen wird, z.B. Lactat, sind grundsätzlich alle Isomeren damit gemeint, bevorzugt sind die jeweils in der Natur vorkommenden Isomere, im hier genannten Falle also das L-Lactat.

Zur Definition von Naturstoffen wird auf den Umfang des "Dictionary of Natural Products", Chapman and Hall/CRC Press, Taylor and Francis Group, z.B. in der online Ausführung von 2011: http://dnp.chemnetbase.com/ verwiesen.

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Die hier wiedergegebenen Indexzahlen und die Wertbereiche der angegebenen Indizes können als Mittelwerte der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (I) und Formel (IV).

Das erfindungsgemäße Verfahren sieht insbesondere vor, dass ein Epoxygruppen-tragendes Polymer, vorzugsweise Polysiloxan, mit einer oder mehreren Carbonsäuren, insbesondere umfassend Acryl- und/oder Methacrylsäure und/oder andere Monocarbonsäuren, welche vorzugsweise frei von zur Polymerisation befähigten Doppelbindungen sind, umgesetzt wird.

Als Polyepoxidverbindungen besonders geeignet sind Polyglycidylverbindungen vom Bisphenol-A- oder Bisphenol-F-Typ sowie deren perhydrierten Derivate oder Glycidylether mehrfunktioneller Alkohole wie Butandiol, Hexandiol, Cyclohexandimethanol, Glycerin, Trimethylolpropan oder Pentaerythrit.

Ebenfalls ist es möglich epoxyfunktionelle Polymerisate von Vinylmonomeren wie z.B. monofunktionelle Acrylate, Methacrylate oder Styrol unter anteiliger Verwendung von z.B. Glycidylmethacrylat einzusetzen.

Insbesondere geeignet sind aber Epoxysiloxane, vor allem solche, wie sie in DE 3820294 beschrieben sind, auf welche hiermit Bezug genommen und die als Referenz inkludiert ist. Mit eingeschlossen sind auch ringförmige Epoxysiloxane und/oder epoxyhaltige Cyclen mit den Kettenlängen 3-8.

Als Carbonsäuren sind Mono- als auch Di- oder höher funktionelle Carbonsäuren geeignet. Als Monocarbonsäuren kommen gesättigte und bevorzugt ungesättigte Carbonsäuren in Frage wie Benzoesäure, Cyclohexancarbonsäure, 2-Ethylhexansäure, Capronsäure, Caprylsäure, Caprinsäure, Laurinsäure, natürliche und synthetische Fettsäuren, insbesondere Acrylsäure, Methacrylsäure, dimere Acrylsäure oder Crotonsäure. Geeignete Dicarbonsäuren sind Phthalsäure, Isophthalsäure, Tetrahydrophthalsäure, Hexahydrophthalsäure, Cyclohexandicarbonsäure, Maleinsäure, Fumarsäure, Malonsäure, Bernsteinsäure, Glutarsäure, Adipinsäure, Azelainsäure, Pimelinsäure, Korksäure, Sebacinsäure, Dodecandisäure sowie hydrierte Dimerfettsäuren. Eine besonders bevorzugte Monocarbonsäure ist die Essigsäure.

Das erfindungsgemäße Verfahren ist im Sinne einer bevorzugten Ausführungsform der Erfindung vorgesehen zur Herstellung von (meth)acrylattragenden Polymeren, insbesondere (meth)acrylattragenden Polysiloxanen, enthaltend mindestens eine (meth)acrylsäureestergruppe und zeichnet sich insbesondere dadurch aus, dass mindestens ein Polysiloxan, das ein oder mehrere Epoxygruppen enthält, vorzugsweise mehrere Epoxygruppen enthält, mit einer oder mehreren Carbonsäuren umgesetzt wird. Die Umsetzung erfolgt vorzugsweise als Additionsreaktion.

Im erfindungsgemäßen Verfahren gilt im Sinne einer bevorzugten Ausführungsform ein Verhältnis von Epoxygruppen zu Carbonsäuren von 1:0,5-2, bevorzugt 1:0,6-1,8, besonders bevorzugt 1:0,8-1,5.

Das erfindungsgemäße Verfahren kann im Sinne einer bevorzugten Ausführungsform bei einer Temperatur von 10 bis 200 °C, vorzugsweise von 40 bis 150 °C, bevorzugt von 80 bis 140 °C durchgeführt werden.

Das erfindungsgemäße Verfahren kann im Sinne einer bevorzugten Ausführungsform vorzugsweise bei einem Druck von 0,5 bis 20 bar, bevorzugt 1 bis 5 bar, insbesondere bevorzugt bei Normaldruck durchgeführt werden.

Das erfindungsgemäße Verfahren kann in Gegenwart oder in Abwesenheit eines Lösemittels erfolgen. Als Lösemittel kommen unter anderem Propanol, Butanol, Glykol, modifizierte Glykole, Methylisobutylketon, Ethylacetat, Butylacetat, Toluol, Xylol und seine Isomere in Frage.

Das erfindungsgemäße Verfahren zeichnet sich im Sinne einer bevorzugten Ausführungsform dadurch aus, dass nur geringe Anteile an Lösemittel eingesetzt werden müssen. Es können <20 Gew.-%, bevorzugt <10 Gew.-%, insbesondere bevorzugt <5 Gew.-% Lösemittel eingesetzt werden, bezogen auf die gesamte Reaktionsmischung. Insbesondere kann auch in Abwesenheit eines Lösemittels gearbeitet werden.

Gegebenenfalls kann man bei der ringöffnenden Addition zur Vermeidung einer vorzeitigen Polymerisation an sich bekannte Polymerisationsinhibitoren, wie z. B. Hydrochinon, *tert*.-Butylcatechol, Di-*tert*-butylkresol in wirksamen Mengen zusetzen.

Die erfindungsgemäße Umsetzung kann sowohl bei Tageslicht als auch unter Lichtausschluss, vorzugsweise bei Tageslicht durchgeführt werden.

Die erfindungsgemäße Umsetzung kann sowohl unter inerten Bedingungen (Stickstoff, Argon) als auch unter Sauerstoff- und/oder Luftatmosphäre, vorzugsweise unter Luftatmosphäre durchgeführt werden. Besonders bevorzugt ist die Umsetzung unter sauerstoffabgereichter Atmosphäre, zum Beispiel einer Stickstoffatmosphäre die <10 Vol.-% Sauerstoff enthält.

Weiterhin gilt, dass das erfindungsgemäße Verfahren in Gegenwart von Umsetzungsprodukten (U) aus (A) und (B) durchgeführt wird, wobei (A) Metallsalze sind und (B) ein Reaktionsprodukt aus Aldehyden und primären Aminen ist.

Der Begriff Umsetzungsprodukt (U) umfasst das Ergebnis der Wechselwirkungen zwischen (A) und (B), die zu stofflichen Umwandlungen führen. Das Umsetzungsprodukt (U) kann auch in situ gebildet werden, d.h. das Verfahren zur Herstellung von Polymermassen (P) erfolgt in Gegenwart von (A) und (B), wobei diese die Möglichkeit zur Wechselwirkung haben und damit ein Umsetzungsprodukt bilden können.

Das Umsetzungsprodukt (U) wird im Sinne einer bevorzugten Ausführungsform in Mengen von 0,001 bis 5 % eingesetzt, bevorzugt 0,01 bis 1 %, besonders bevorzugt 0,01 bis 0,5 %.

Als Metallsalze können Salze von Chrom wie beispielsweise Chrom(III) bromid, Chrom(II) chlorid, Chrom(III) chlorid, Chrom(III) fluorid, Chrom(III) nitrat, Chrom(III) perchlorat, Chrom(III) phosphat, Chrom(III) sulfat, Chromylchlorid, Chromoxid, Kaliumchrom(III)-oxalat, Chrom(III)acetat eingesetzt werden. Weiterhin entspricht es einer bevorzugten Ausführungsform, dass die Metallsalze vorzugsweise Chrom (III) salze, insbesondere Chrom (III) acetat umfassen. Hierbei können die Chromsalze in der Hydratform vorliegen und/oder wasserfrei sein.
(B) ist ein Reaktionsprodukt aus Aldehyd und primärem Amin, insbesondere eine sogenannte Schiff'sche Base. Das Reaktionsprodukt aus Aldehyd und primärem Amin kann auch in situ gebildet werden, d.h. das Verfahren zur Herstellung von Polymermassen (P) erfolgt in Gegenwart von (A) und (B), das auch in situ gebildet werden kann, wobei (A) und (B) die Möglichkeit zur Wechselwirkung haben und damit ein Umsetzungsprodukt bilden können.
Als Aldehyde können vorteilhafterweise aliphatische und/oder aromatische Aldehyde eingesetzt werden, vorzugsweise aromatische Aldehyde, bevorzugt Hydroxylgruppen-tragende Aldehyde, besonders bevorzugt Phenolgruppen tragende, insbesondere Salicylaldehyd.
Als primäre Amine können eingesetzt werden primäre Mono- oder Polyamine wie beispielsweise substituiertes oder unsubstituiertes C₁-C₃₀-Alkylamin, substituiertes oder unsubstituiertes C₁-C₃₀-Alkylamin mit einer und/oder mehreren Dreifachbindungen, substituiertes oder unsubstituiertes C₁-C₃₀-Alkylamin mit einer und/oder mehreren Doppelbindungen, substituiertes oder unsubstituiertes C₆-C₃₀-Arylamin, substituiertes oder unsubstituiertes C₆-C₃₀-Heteroarylamin, substituiertes oder unsubstituiertes C₁-C₁₂-Alk-C₆-C₁₂-Arylamin, substituiertes oder unsubstituiertes C₁-C₃₀-Alkyloxyamin, substituiertes oder unsubstituiertes cyclisches C₃-C₃₀-Alkylamin, vorzugsweise Fettamine und Fettalkoholamine, insbesondere bevorzugt primäre Fettalkoholamine, die aus (vorzugsweise geradkettigen) gesättigten oder (vorzugsweise geradkettigen) ungesättigten Fettalkoholen und Addition an Acrylnitril und anschließender Hydrierung zugänglich sind.
Der Begriff Fettamin ist dem Fachmann bekannt. Ein Fettamin ist ein von der jeweiligen Fettsäure abgeleites langkettiges Amin mit mindestens einer Kohlenstoffkette mit ≥ 8 C-Atomen, wie z.B. 8-24 C-Atomen. Die Namen von Fettaminen leiten sich häufig von dem verwendeten Fett ab, z.B.: Kokosamin (Kokosfettamin), Talgamin (Talgfettamin) usw.
Dem Fachmann ist bekannt, dass es sich bei der Reaktion von Aldehyd und Amin um eine Kondensationsreaktion handelt, bei der Wasser als Reaktionsprodukt entsteht. Aldehyd und Amin können vorteilhafterweise zusammen im Verhältnis 1:2, bevorzugt 1:1,5, besonders bevorzugt 1:1 vermengt werden, eventuell unter Zuhilfenahme eines Schlepp- und/oder Trockenmittels, welches das Wasser aus der Reaktionsmischung entfernt. Mögliche Trockenmittel sind Magnesiumsulfat, Natriumsulfat, Zeolithe, Molekularsieb usw., als Schleppmittel können alle organischen Lösemittel eingesetzt werden, die mit Wasser ein Azeotrop bilden. Dazu gehören u.a. aliphatische sowie aromatische Alkane wie beispielsweise Hexan, Cyclohexan, Toluol etc. Hilfsweise kann ein Lösemittel wie beispielsweise Ethanol, Propanol, Butanol, Tetrahydrofuran, Dioxan, Methyltetrahydrofuran, Methylethylketon, Methylisobutylketon, Ethylacetat eingesetzt werden.

Die so dargestellten Reaktionsprodukte (B) aus Aldehyd und Amin, insbesondere Schiff'sche Basen, oder deren Lösungen in organischen Lösemitteln können noch Reste der verwendeten Aldehyde und/oder Amin enthalten. Bezogen auf (B) können bis zu 10 Gew.-%, bevorzugt weniger als 8 Gew.-%, weiter bevorzugt weniger als 5 Gew.-%, und insbesondere weniger als 5 Gew.-% Aldehyd und/oder Amin enthalten sein.

Gegebenenfalls kann ein Restgehalt in den oben genannten Grenzen bzw. ein Zusatz an Amin in der Umsetzung mit den epoxy-funktionellen Polysiloxanen vorteilhaft sein.

Die erfindungsgemäße Herstellung des Umsetzungsproduktes (U) aus (A) und (B) wird vorteilhafterweise so durchgeführt, dass ein molares Verhältnis von 1:5 von (A) zu (B) besteht, vorzugsweise 1:3, insbesondere bevorzugt 1:2.

Die erfindungsgemäße Umsetzung zur Herstellung des Umsetzungsproduktes (U) kann bei einer Temperatur von 10 bis 200 °C, vorzugsweise von 20 bis 150 °C, bevorzugt von 25 bis 100 °C durchgeführt werden.

Die erfindungsgemäße Umsetzung zur Herstellung des Umsetzungsproduktes (U) kann vorzugsweise bei einem Druck von 0,5 bis 20 bar, bevorzugt 1 bis 5 bar, insbesondere bevorzugt bei Normaldruck durchgeführt werden.

Die erfindungsgemäße Umsetzung zur Herstellung des Umsetzungsproduktes (U) kann vorzugsweise bei einem pH-Wert von 2 bis 12, bevorzugt von 4 bis 10, besonders bevorzugt von 5 bis 8 durchgeführt werden.

Die erfindungsgemäße Umsetzung zur Herstellung des Umsetzungsproduktes (U) kann in Gegenwart oder in Abwesenheit eines Lösemittels erfolgen. Vorzugsweise erfolgt die Umsetzung in Gegenwart von polaren und protischen Lösemitteln wie Methanol, Ethanol, Propanol, Butanol, Glykol, modifizierte Glykole.

Die erfindungsgemäße Umsetzung zur Herstellung des Umsetzungsproduktes (U) kann sowohl bei Tageslicht als auch unter Lichtausschluss, vorzugsweise bei Tageslicht durchgeführt werden.

Die erfindungsgemäße Umsetzung zur Herstellung des Umsetzungsproduktes (U) kann sowohl unter inerten Bedingungen (Stickstoff, Argon) als auch unter Sauerstoff- und/oder Luftatmosphäre, vorzugsweise unter Luftatmosphäre durchgeführt werden.

Als ein weiterer Teilschritt zur Herstellung des Umsetzungsproduktes (U) kann eine anschließende Destillation bzw. Aufreinigung der Umsetzungsprodukte vorteilhaft sein. Die Destillation bzw. Aufreinigung kann z. B. mit Hilfe eines Rotationsverdampfers, vorzugsweise bei einer Temperatur von 20 bis 250 °C, bevorzugt 40 bis 180 °C und besonders bevorzugt 50 bis 150 °C erfolgen. Der Druck beträgt dabei vorzugsweise von 0 bis 0,02 bar, bevorzugt von größer 0 bis 0,1 bar und besonders bevorzugt von 0,000001 bis 0,001 bar. Die Destillation bzw. Aufarbeitung kann insbesondere zur Abtrennung von Lösemitteln vorteilhaft sein.

Die erhaltenen Umsetzungsprodukte (U) aus (A) und (B) können direkt verwendet oder aufgearbeitet werden. Die Aufarbeitung kann z. B. mittels Extraktion und anschließender Filtration gegebenenfalls unter Verwendung von Filterhilfsmitteln erfolgen. Zur Extraktion geeignete Lösungsmittel des erfindungsgemäßen Verfahrens sind Wasser oder organische Lösemittel oder ein oder mehrphasige Mischungen daraus. Als organische Lösemittel eignen sich z. B. Ethylacetat, Butylacetat, Ethylmethylketon, Xylol, Toluol, Chloroform, Dichlormethan, Hexan, Petrolether, Diethylether, Polyether oder ionische Flüssigkeiten.

Das erfindungsgemäße Verfahren zur Herstellung von Polymermassen (P) kann vorzugsweise so ausgeführt werden, dass es drei Verfahrensschritte umfasst, nämlich 1. Herstellung eines Reaktionsproduktes B, insbesondere einer Schiff'schen Base (1. Verfahrensschritt), und 2. Umsetzung des Reaktionsproduktes B, insbesondere der Schiff'schen Base, mit einem Metallsalz, um das Umsetzungsprodukt (U) zu erhalten (2. Verfahrensschritt) und 3. Herstellung eines carbonsäureesterhaltigen Polymeren in Gegenwart des Umsetzungsproduktes (U) (3. Verfahrensschritt). Dies entspricht einer bevorzugten Ausführungsform der Erfindung.

Alle drei Verfahrensschritte der vorgenannten bevorzugten Ausführungsform der Erfindung (Herstellung eines Reaktionsproduktes (B), insbesondere einer Schiff'schen Base (1. Verfahrensschritt), und Umsetzung des Reaktionsproduktes B, insbesondere der Schiff'schen Base, mit einem Metallsalz (2. Verfahrensschritt) und Herstellung eines carbonsäureesterhaltigen Polymeren (3. Verfahrensschritt) können in dem erfindungsgemäßen Verfahren sowohl als Eintopfreaktion, als aufeinander folgende getrennt durchgeführte Schritte oder auch dosierkontrolliert, vorzugsweise jedoch als Eintopfreaktion durchgeführt werden. Die Reaktion kann in einem Batch, Semi-batch oder kontinuierlichen Verfahren durchgeführt werden. Insbesondere bevorzugt ist die Eintopfreaktion der Verfahrensschritte 2 und 3. Hierbei wird das Umsetzungsprodukt U "in situ" hergestellt und anschließend direkt für Verfahrensschritt 3 zur Verfügung gestellt. In diesem Zusammenhang meint "in situ" die Herstellung einer Ausgangsverbindung und deren unmittelbare Weiterverwendung im selben Reaktionsgefäß.

Insbesondere die erfindungsgemäß erhältlichen carbonsäureesterhaltigen Polymere, enthaltend mindestens eine Carbonsäureestergruppe, können z. B. zur Herstellung von erfindungsgemäßen Zubereitungen verwendet werden. Die erfindungsgemäßen Zubereitungen, zeichnen sich dadurch aus, dass sie die erfindungsgemäßen carbonsäureesterhaltige Polymeren enthaltend mindestens eine Carbonsäureestergruppe enthalten. Die erfindungsgemäßen Zubereitungen können weitere Zusatzstoffe wie z. B. Sikkative, Verlaufsmittel, Farben und/oder Farbpigmente, Benetzungsmittel, Bindemittel, Reaktivverdünner, Tenside, thermisch aktivierbare Initiatoren, Photoinitiatoren, Katalysatoren, Emollients, Emulgatoren, Antioxidantien, Hydrotrope (oder Polyole), Fest- und Füllstoffe, Perlglanzadditive, Insektrepellentien, Anti-Foulingmittel, Nukleierungsmittel, Konservierungsstoffe, optische Aufheller, Flammschutzmittel, Antistatika, Treibmittel, Weichmacher, Parfüme, Wirkstoffe, Pflegeadditive, Überfettungsmittel, Lösungsmittel und/oder Viskositätsmodulatoren enthalten. Bevorzugte Zusätze sind Farben und/oder Farbpigmente.

Ein weiterer Gegenstand der vorliegenden Erfindung ist ein Polymer, vorzugsweise härtbares Polymer, insbesondere härtbares (meth)acrylattragendes Polysiloxan, hergestellt nach einem Verfahren wie zuvor beschrieben. Insbesondere sei auf die vorangegangenen bevorzugten Ausführungsformen hingewiesen, die auch für das erfindungsgemäße Polymer vorteilhaft anwendbar sind. Vorzugsweise ist im Sinne der vorliegenden Erfindung das härtbare Polymer ein strahlenhärtendes Polymer, insbesondere ein UVhärtendes Polymer. UV-härtbar heißt, dass durch die Einwirkung der UV-Strahlung reaktive Materialien von einem niedermolekularen in einen hochmolekularen Zustand überführt werden.

Ein weiterer Gegenstand der vorliegenden Erfindung ist ein Umsetzungsprodukt, welches durch Umsetzung von Chromsalzen, vorzugsweise Chrom (III) salzen, insbesondere Chrom (III) acetat und einem Reaktionsprodukt aus Aldehyden und Fettaminen gebildet ist. Insbesondere sei auf die vorangegangenen bevorzugten Ausführungsformen hingewiesen.

Ein weiterer Gegenstand der vorliegenden Erfindung ist die Verwendung des vorgenannten Umsetzungsproduktes als Katalysator bei der Herstellung von Polymer, vorzugsweise härtbarem Polymer, insbesondere härtbarem (meth)acrylattragendem Siloxan, vorteilhafterweise bei der Herstellung von Polymer wie zuvor beschrieben. Insbesondere sei auf die vorangegangenen bevorzugten Ausführungsformen hingewiesen.

Ein weiterer Gegenstand der vorliegenden Erfindung ist die Verwendung der erfindungsgemäßen Polymeren, vorzugsweise härtbaren Polymers, insbesondere härtbaren (meth)acrylattragendem Polysiloxans, insbesondere herstellbar wie zuvor beschrieben, als Trennbeschichtung allein oder in Mischung mit weiteren Additiven wie vorzugsweise Härtungsinitiatoren, Füllstoffen, Pigmenten, anderen Siloxanen und/oder Acrylatsystemen und/oder weiteren Zusatzstoffen, insbesondere in Mischung mit weiteren acrylierten Siliconen.

Ein weiterer Gegenstand der vorliegenden Erfindung ist ein Verfahren zum Beschichten von flächigen Trägern durch Auftragung von erfindungsgemäßem härtbarem Polymer, insbesondere härtbarem (meth)acrylattragendem Polysiloxan wie zuvor beschrieben oder herstellbar wie zuvor beschrieben.

Ein weiterer Gegenstand der Erfindung besteht in der Verwendung der erfindungsgemäßen (meth)acrylattragenden Polysiloxane als strahlenhärtbare abhäsive Beschichtungsmittel für flächige Träger. Die erfindungsgemäßen Produkte können als solche direkt verwendet werden. Es ist lediglich im Falle der UV- Härtung notwendig, den (meth)acrylattragenden Polysiloxanen einen Radikalstarter zuzusetzen. Die Zugabe erfolgt z. B. in Mengen von 2 bis 5 Gew.-%, bezogen auf Siloxan.

Die Wahl des Radikalstarters sollte sich dabei am Wellenlängenspektrum der zur Aushärtung verwendeten Strahlenquelle orientieren. Derartige Radikalstarter sind bekannt. Beispiele solcher Radikalstarter sind Benzophenon, dessen Oxime oder Benzoinether.

Es ist möglich, die so erhaltenen Beschichtungsmassen in an sich bekannter Weise noch durch Zusatz weiterer Produkte zu modifizieren. Derartige bekannte Modifizierungsmittel sind Siloxane mit Gruppen, welche bei der Aushärtung der Beschichtungsmasse in diese chemisch eingebaut werden. Besonders geeignete Modifizierungsmittel sind Siloxane mit an Si-Atome gebundenen Wasserstoffatomen. Diese können u. a. eine Erniedrigung der Viskosität der Beschichtungsmasse bewirken, wodurch ihre Auftragbarkeit auf flächige Träger verbessert wird.

Es ist ferner möglich, den Beschichtungsmitteln Zusatzmittel zuzugeben, die als inerte Substanzen von der Beschichtungsmasse bei der Erhärtung umschlossen werden. Beispiele solcher in der Beschichtungsmasse verteilten Substanzen sind hochdisperse Kieselsäure oder Polymerisate aus Fluorkohlenstoffen.

Ein weiterer Gegenstand der Erfindung sind strahlenhärtende Beschichtungsmassen, welche umfassen
(i) erfindungsgemäßes Polymer, vorzugsweise härtbares Polymer, insbesondere härtbares (meth)acrylattragendes Polysiloxan, insbesondere herstellbar wie zuvor beschrieben,
(ii) sowie Zusätze,
wobei die Zusätze ausgewählt sind aus Photoinitiatoren, Photosensibilisatoren, Füllstoffen, Pigmenten, Lösemittel, phosphorhaltige Verbindungen welche unter UV-Licht polymerisieren, Stabilisatoren z.B. Phosphite oder sterisch gehinderte Amine (hindered amine light stabilizer, HALS), Anti-Misting-Additiven und Amin-Synergisten,
insbesondere in Mischung mit weiteren acrylierten Siliconen.

### Ausführungsbeispiele:

### Allgemeine Methoden und Materialien

### NMR:

Die Aufnahme und Interpretation der NMR-Spektren ist dem Fachmann bekannt ("NMR Spectra of Polymers and Polymer Additives" von A. Brandolini und D. Hills, 2000, Marcel Dekker. Inc.).

Die Spektren wurden mit einem Bruker Spectrospin Spektrometer bei Raumtemperatur aufgenommen, die Messfrequenz betrug bei der Aufnahme der Protonenspektren 400 MHz.

### Viskosität:

Die Viskositäten wurden mit einem Rotationsviskosimeter Brookfield Synchro-Lectric der Firma Brookfield (Gerätetyp LVT) und der Spindel LV 2 in Anlehnung an die DIN 5391 bestimmt.

### Materialien:

Adogen® 163 D ist ein primäres destilliertes Laurylamin, Adogen® 172 D ist ein destilliertes primäres Oleylamin pflanzlicher Herkunft, Adogen® 160 D ist ein destilliertes primäres Amin aus der Kokosfettsäure. TEGO® RC 711 ist ein modifiziertes Siliconacrylat. Es handelt sich um Produkte von der Evonik Industries AG..

### Synthesebeispiel 1

In 200 ml Toluol wurden 71,4 g Salicylaldehyd (Aldrich) gelöst. Anschließend wurden 100 g Adogen 163 D (Evonik Industries, Stickstoffwert: 7,5 %) zugegeben und auf Rückflusstemperatur erhitzt. Nach 1 Stunde wurde ein Wasserabscheider angeschlossen und weitere 3 Stunden gerührt. Nach Abtrennung des Reaktionswassers erfolgte die Destillation am Rotationsverdampfer bei 70 °C und <1mbar. Aus dem ¹H-NMR-Spektrum war ein vollständiger Umsatz der Aldehydgruppen zu den entsprechenden Schiff'schen Basen nachweisbar.

### Synthesebeispiel 2:

In 200 ml Toluol wurden 43,6 g Salicylaldehyd (Aldrich) gelöst. Anschließend wurden 100 g Adogen 172 D (Evonik Industries, Stickstoffwert: 5,0 %) zugegeben und auf 90 °C erhitzt. Nach 2,5 Stunden wurde ein Wasserabscheider angeschlossen und weitere 3 Stunden gerührt. Nach Abtrennung des Reaktionswassers erfolgte die Destillation am Rotationsverdampfer bei 70 °C und <1mbar. Aus dem ¹H-NMR-Spektrum war ein vollständiger Umsatz der Aldehydgruppen zu den entsprechenden Schiff'schen Basen nachweisbar.

### Synthesebeispiel 3:

In 200 ml Toluol wurden 61,1 g Salicylaldehyd (Aldrich) gelöst. Anschließend wurden 100 g Adogen 160 D (Evonik Industries, Stickstoffwert: 7,0 %) zugegeben und auf 90 °C erhitzt. Nach 2,5 Stunden wurde ein Wasserabscheider angeschlossen und weitere 3 Stunden gerührt. Nach Abtrennung des Reaktionswassers erfolgte die Destillation am Rotationsverdampfer bei 70 °C und <1mbar. Aus dem ¹H-NMR-Spektrum war ein vollständiger Umsatz der Aldehydgruppen zu den entsprechenden Schiff'schen Basen nachweisbar.

### Synthesebeispiel 4:

20 g der Schiff'schen-Base aus Synthesebeispiel 1 wurden in 200 ml Ethanol vorgelegt. Bei Raumtemperatur wurden 16,4 g wässrige Cr(III)acetat Lösung (50 %ig in Wasser) zugegeben. Die klare, dunkelgrüne Lösung wurde 6 Stunden auf Rückflusstemperatur (ca.80 °C) erhitzt. Anschließend wurde das Lösemittel über eine Destillation bei 100°C am Rotationsverdampfer (<1mbar) entfernt. Es entsteht eine grün/bräunliche und pastöse Flüssigkeit. Der Chrom-Gehalt beträgt 6,7 %.

### Synthesebeispiel 5:

20 g der Schiff'schen-Base aus Synthesebeispiel 2 wurden in 200 ml Ethanol vorgelegt. Bei Raumtemperatur wurden 11,8 g wässrige Cr(III)acetat Lösung (50 %ig in Wasser) zugegeben. Die klare, dunkelgrüne Lösung wurde 6 Stunden auf Rückflusstemperatur (ca.80 °C) erhitzt. Anschließend wurde das Lösemittel über eine Destillation bei 100°C am Rotationsverdampfer (<1mbar) entfernt. Es entsteht eine grün/bräunliche und pastöse Flüssigkeit. Der Chrom-Gehalt beträgt 5,5 %.

### Synthesebeispiel 6:

20 g der Schiff'schen-Base aus Synthesebeispiel 3 wurden in 200 ml Ethanol vorgelegt. Bei Raumtemperatur wurden 14,9 g wässrige Cr(III)acetat Lösung (50 %ig in Wasser) zugegeben. Die klare, dunkelgrüne Lösung wurde 6 Stunden auf Rückflusstemperatur (ca.80 °C) erhitzt. Anschließend wurde das Lösemittel über eine Destillation bei 100°C am Rotationsverdampfer (<1mbar) entfernt. Es entsteht eine grün/bräunliche und pastöse Flüssigkeit. Der Chrom-Gehalt beträgt 6,7 %.

### Synthesebeispiel 7:

In einem beheizbaren Glaskolben mit mechanischem Rührer, Thermometer und Gaseinleitung wurden 227,7 g seitständiges Epoxysiloxan (Evonik Industries AG, Epoxywert: 1,37 %), 0,05 g Methylhydrochinon, 0,05 g para-Methoxyphenol, 0,12 g des Umsetzungsproduktes aus Synthesebeispiel 4 und zuletzt 15,2 g Acrylsäure (Aldrich) mit 0,8 g Essigsäure (Baker) vorgelegt und unter Rühren und Gaseinleitung (Luft) auf 120 °C aufgeheizt. Im Anschluss wurde mittels einer entnommenen Probe die Säurezahl und somit der Umsatz bestimmt. Bei einer Reaktionszeit von 4 Stunden und einem Umsatz von >99% wurde der Ansatz abgekühlt, filtriert und bei 120°C im Rotationsverdampfer (<1 mbar) von überschüssigen Resten an Acrylsäure befreit. Aus dem ¹H- und ²⁹Si-NMR Spektrum war ein nahezu vollständiger Umsatz der Epoxygruppen zu den entsprechenden Carbonsäureestern nachweisbar; Viskosität: 745 mPa*s.

### Synthesebeispiel 8:

In einem beheizbaren Glaskolben mit mechanischem Rührer, Thermometer und Gaseinleitung wurden 228,6 g endständiges Epoxysiloxan (Evonik Industries AG, Epoxywert: 1,47 %), 0,03 g Methylhydrochinon, 0,03 g para-Methoxyphenol, 0,12 g des Umsetzungsproduktes aus Synthesebeispiel 5 und zuletzt 17,4 g Acrylsäure (Aldrich) vorgelegt und unter Rühren und Gaseinleitung (Luft) auf 115 °C aufgeheizt. Im Anschluss wurde mittels einer entnommenen Probe die Säurezahl und somit der Umsatz bestimmt. Bei einer Reaktionszeit von 5 Stunden und einem Umsatz von >99% wurde der Ansatz abgekühlt, filtriert und bei 120°C im Rotationsverdampfer (<1 mbar) von überschüssigen Resten an Acrylsäure befreit. Aus dem ¹H- und ²⁹Si-NMR Spektrum war ein nahezu vollständiger Umsatz der Epoxygruppen zu den entsprechenden Carbonsäureestern nachweisbar; Viskosität: 99 mPa*s.

### Synthesebeispiel 9:

In einem beheizbaren Glaskolben mit mechanischem Rührer, Thermometer und Gaseinleitung wurden 227,7 g Epoxysiloxan aus Synthesebeispiel 7, 0,05 g Methylhydrochinon, 0,05 g para-Methoxyphenol, 0,12 g des Umsetzungsproduktes aus Synthesebeispiel 6 und zuletzt 12,7 g Acrylsäure (Aldrich) vorgelegt und unter Rühren und Gaseinleitung (Luft) auf 120 °C aufgeheizt. Im Anschluss wurde mittels einer entnommenen Probe die Säurezahl und somit der Umsatz bestimmt. Bei einer Reaktionszeit von 4 Stunden und einem Umsatz von >85% wurde der Ansatz abgekühlt und filtriert. Aus dem ¹H- und ²⁹Si-NMR Spektrum war ein Umsatz der Epoxygruppen von 87 % zu den entsprechenden Carbonsäureestern nachweisbar (durch die reduzierte Säuremenge entspricht dies einem Umsatz von etwa 97 %); Viskosität: 581 mPa*s.

### Synthesebeispiel 10:

In einem beheizbaren Glaskolben mit mechanischem Rührer, Thermometer und Gaseinleitung wurden 227,7 g Epoxysiloxan aus Synthesebeispiel 7, 0,05g Methylhydrochinon, 0,05g para-Methoxyphenol, 0,06 g wässrige Cr(III)acetat Lösung (50 %ig in Wasser), 0,26 g der Schiff'schen-Base aus Synthesebeispiel 1 und zuletzt 15,2 g Acrylsäure (Aldrich) mit 0,8 g Essigsäure (Baker) vorgelegt und unter Rühren und Gaseinleitung auf 120°C aufgeheizt. Im Anschluss wurde mittels einer entnommenen Probe die Säurezahl und somit der Umsatz bestimmt. Bei einer Reaktionszeit von 6 Stunden und einem Umsatz von >99 % wurde der Ansatz abgekühlt, filtriert und bei 120°C destilliert. Aus dem ¹H- und ²⁹Si-NMR Spektrum war ein nahezu vollständiger Umsatz der Epoxygruppen zu den entsprechenden Carbonsäureestern nachweisbar; Viskosität: 768 mPa*s.

### Synthesebeispiel 11:

In einem beheizbaren Glaskolben mit mechanischem Rührer, Thermometer und Gaseinleitung wurden 228,6 g Epoxysiloxan aus Synthesebeispiel 8, 0,02g Methylhydrochinon, 0,02 g para-Methoxyphenol, 0,06 g wässrige Cr(III)acetat Lösung (50 %ig in Wasser), 0,24 g der Schiff'schen-Base aus Synthesebeispiel 2 und zuletzt 17,4 g Acrylsäure (Aldrich) vorgelegt und unter Rühren und Gaseinleitung auf 115°C aufgeheizt. Im Anschluss wurde mittels einer entnommenen Probe die Säurezahl und somit der Umsatz bestimmt. Bei einer Reaktionszeit von 4 Stunden und einem Umsatz von >99 % wurde der Ansatz abgekühlt, filtriert und bei 120°C destilliert. Aus dem ¹H- und ²⁹Si-NMR Spektrum war ein nahezu vollständiger Umsatz der Epoxygruppen zu den entsprechenden Carbonsäureestern nachweisbar; Viskosität: 98 mPa*s.

### Synthesebeispiel 12:

In einem beheizbaren Glaskolben mit mechanischem Rührer, Thermometer und Gaseinleitung wurden 227,7 g Epoxysiloxan aus Synthesebeispiel 7, 0,05 g Methylhydrochinon, 0,05 g para-Methoxyphenol, 0,06 g wässrige Cr(III)acetat Lösung (50 %ig in Wasser), 0,19 g der Schiff'schen-Base aus Synthesebeispiel 3 und zuletzt 15,2 g Acrylsäure (Aldrich) vorgelegt und unter Rühren und Gaseinleitung (Luft) auf 120 °C aufgeheizt. Im Anschluss wurde mittels einer entnommenen Probe die Säurezahl und somit der Umsatz bestimmt. Bei einer Reaktionszeit von 5 Stunden und einem Umsatz von >85% wurde der Ansatz abgekühlt und filtriert. Aus dem ¹H- und ²⁹Si-NMR Spektrum war ein Umsatz der Epoxygruppen von 87 % zu den entsprechenden Carbonsäureestern nachweisbar (durch die reduzierte Säuremenge entspricht dies einem Umsatz von etwa 97 %); Viskosität: 600 mPa*s.

### Vergleichsbeispiel 1:

In einem beheizbaren Glaskolben mit mechanischem Rührer, Thermometer und Gaseinleitung wurden 227,7 g Epoxysiloxan aus Synthesebeispiel 7, 0,02 g Methylhydrochinon, 0,02 g para-Methoxyphenol, 0,49 g wässrige Cr(III)acetat Lösung (50 %ig in Wasser) und zuletzt 15,2 g Acrylsäure (Aldrich) mit 0,8 g Essigsäure (Baker) vorgelegt und unter Rühren und Gaseinleitung (Luft) auf 120°C aufgeheizt. Im Anschluss wurde mittels einer entnommenen Probe die Säurezahl und somit der Umsatz bestimmt. Nach 16 Stunden Reaktionszeit wurde der Ansatz bei einem Umsatz von 93% abgebrochen, abgekühlt, filtriert und bei 120°C destilliert. Aus dem ¹H- und ²⁹Si-NMR Spektrum war ein Umsatz von 91 % der Epoxygruppen zu den entsprechenden Carbonsäureestern nachweisbar; Viskosität: 1026 mPa*s.

### Vergleichsbeispiel 2:

In einem beheizbaren Glaskolben mit mechanischem Rührer, Thermometer und Gaseinleitung wurden 227,7 g Epoxysiloxan aus Synthesebeispiel 7, 0,05 g Methylhydrochinon, 0,05 g para-Methoxyphenol, 0,26 g der Schiff'schen-Base aus Synthesebeispiel 2 und zuletzt 15,2 g Acrylsäure (Aldrich) mit 0,8 g Essigsäure (Baker) vorgelegt und unter Rühren und Gaseinleitung auf 120°C aufgeheizt. Im Anschluss wurde mittels einer entnommenen Probe die Säurezahl und somit der Umsatz bestimmt. Nach 12 Stunden Reaktionszeit wurde der Ansatz bei einem Umsatz von 70 % abgebrochen, abgekühlt, filtriert und bei 120°C destilliert. Aus dem ¹H- und ²⁹Si-NMR Spektrum war ein Umsatz von 57 % der Epoxygruppen zu den entsprechenden Carbonsäureestern nachweisbar; Viskosität: 2679 mPa*s.

### Vergleichsbeispiel 3:

In einem beheizbaren Glaskolben mit mechanischem Rührer, Thermometer und Gaseinleitung wurden 227,7 g Epoxysiloxan aus Synthesebeispiel 7, 0,05 g Methylhydrochinon, 0,05 g para-Methoxyphenol, 0,15 g Adogen 163 D und zuletzt 15,2 g Acrylsäure (Aldrich) mit 0,8 g Essigsäure (Baker) vorgelegt und unter Rühren und Gaseinleitung auf 120°C aufgeheizt. Im Anschluss wurde mittels einer entnommenen Probe die Säurezahl und somit der Umsatz bestimmt. Nach 12 Stunden Reaktionszeit wurde der Ansatz bei einem Umsatz von 67 % abgebrochen, abgekühlt, filtriert und bei 120°C destilliert. Aus dem ¹H- und ²⁹Si-NMR Spektrum war ein Umsatz von 55 % der Epoxygruppen zu den entsprechenden Carbonsäureestern nachweisbar; Viskosität: 3390 mPa*s.

### Vergleichsbeispiel 4:

In einem beheizbaren Glaskolben mit mechanischem Rührer, Thermometer und Gaseinleitung wurden 227,7 g Epoxysiloxan aus Synthesebeispiel 8, 0,02 g Methylhydrochinon, 0,02 g para-Methoxyphenol, 0,49 g wässrige Cr(III)acetat Lösung (50 %ig in Wasser) und zuletzt 17,4 g Acrylsäure (Aldrich) vorgelegt und unter Rühren und Gaseinleitung (Luft) auf 120°C aufgeheizt. Im Anschluss wurde mittels einer entnommenen Probe die Säurezahl und somit der Umsatz bestimmt. Nach 15 Stunden Reaktionszeit wurde der Ansatz bei einem Umsatz von 70 % abgebrochen, abgekühlt, filtriert und bei 120°C destilliert. Aus dem ¹H- und ²⁹Si-NMR Spektrum war ein Umsatz von 68 % der Epoxygruppen zu den entsprechenden Carbonsäureestern nachweisbar; Viskosität: 324 mPa*s.

### Anwendungstechnische Prüfung:

Die anwendungstechische Prüfung der Synthesebeispiele 7 bis 12 und der Vergleichsbeispiele 1 bis 3 erfolgte als Trennbeschichtung. Trennbeschichtungen sind im Stand der Technik bekannt, bevorzugt abhäsive Beschichtungen auf flächigen Trägern, für die Anwendung in Klebebändern oder Etikettenlaminaten.

Zur Herstellung der Trennbeschichtungen wurden je 68g der Synthesebeispiele 7 bis12 und der Vergleichsbeispiele 1 bis 3 mit 30g TEGO® RC 711 und 2g Photoinitiator TEGO® A18 von der Evonik Industries AG vermengt. TEGO® RC 711 wird im Allgemeinen als Haftungskomponente empfohlen. Die Beschichtungsmassen wurden durch Verrühren von Hand mit einem Spatel solange gerührt bis keine Inhomogenität mehr sichtbar war.

Die Beschichtungsmassen wurden auf einen flächigen Träger aufgebracht. Dieser war in allen Beispielen eine 50cm breite BOPP (orientierte Polypropylen) Folie welche zuvor mit einer Generatorleistung von 1 kW einer Coronavorbehandlung unterzogen wurde. Die Beschichtungsmassen wurde mittels eines 5-Walzenbeschichtungswerkes der Firma COATEMA® Coating Machinery GmbH, Dormagen, Deutschland mit einem Flächengewicht von ca. 1 g/m² aufgetragen und durch Einwirkung von UV-Licht einer Mitteldruckquecksilberdampflampe der Firma IST® Metz GmbH, Nürtingen Deutschland mit 60 W/cm bei einer Bahngeschwindigkeit von 100 m/min unter Stickstoffatmosphäre mit einem Restsauerstoffgehalt unter 50 ppm gehärtet.

Die Trennbeschichtungen wurden einer Prüfung auf Rub-off, Trennwert und Restklebkraft unterzogen.

Rub-off: Die Überprüfung der Haftung der gehärteten Beschichtung zum Trägermaterial erfolgt durch kräftiges Reiben mit dem Daumen auf der Beschichtung. Bei mangelnder Haftung bilden sich gummiartige Krümel. Solche Krümel sollen auch bei intensivem Reiben nicht entstehen. Die Prüfung wird von einem ausgebildeten Panel durchgeführt. Die Auswertung wird kategorisiert in Schulnoten von 1 bis 3, wobei 3 ungenügend entspricht.

Note 1= Sehr gute Kratzfestigkeit und Verankerung zum Substrat. Mit linearer und anschließender kreisförmiger Bewegung auf der gleichen Stelle sind keine Krümel feststellbar.

Note 2= Hinreichende Kratzfestigkeit und Haftung zum Substrat. Mit linearer Bewegung werden keine Krümel erzeugt, jedoch mit anschließender kreisförmiger Bewegung auf gleicher Stelle entstehen Krümel.

Note 3= Unzureichende Kratzfestigkeit und Haftung. Bereits mit linearer Bewegung werden Krümel erzeugt.

Trennwerte: Die Trennwerte werden gemäß Testvorschrift aus FINAT Handbook 8th Edition, The Hague/ NI, 2009 unter der Bezeichnung FTM 10 durchgeführt, mit der Änderung dass die Lagerung unter Druck bei 40°C durchgeführt wird. Verwendet wurden die Klebebänder TESA®7475 und TESA®7476, Warenzeichen der Firma tesa SE, Deutschland, Hamburg. Trennwerte hängen vom Testklebeband, vom Silicon und von der Aushärtung des Silicons ab. Eine schlecht vernetzte Silicontrennbeschichtung erzeugt im Vergleich zu einem gut vernetzten Silicon vergleichbaren Aufbaus deutlich zu niedrigere Trennwerte.

Restklebkraft: Die Restklebkraft wird gemäß Testvorschrift aus FINAT Handbook 8th Edition, The Hague/ NI, 2009 unter der Bezeichnung FTM 11 durchgeführt, mit der Änderung dass die Lagerung des Testklebestreifens im Siliconkontakt für eine Minute durchgeführt wird und die Standardoberfläche eine unbehandelte BoPP Oberfläche ist. Verwendet wurde das Klebeband TESA®7475, Warenzeichen der Firma tesa SE, Deutschland, Hamburg. Die Restklebkraft ist ein Maß für die Vernetzung der Silicone. Sind nicht polymerisierte und deshalb migrierfähige Siliconbestandteile vorhanden, werden mit zunehmenden Anteil solcher Komponenten zunehmend niedrigere Restklebkraftwerte erreicht. Werte über 80% gelten als vertretbar.

Die Ergebnisse des Syntheseumsatzes (bestimmt durch Säurezahl), der Viskosität, des Rub-off Tests, der Trennwerte sowie der Restklebkraft sind in Tabelle 1 dargestellt:

**Tabelle 1: Ergebnisse**

| Synthesebeispiel | Reaktionsdauer [h] | Umsatz [%] | Viskosität [mPas] | Rub-off | TW (TESA 7475) [cN/2,5 cm] | TW (TESA 7476) [cN/2,5 cm] | KUR [%] |
|---|---|---|---|---|---|---|---|
| 7 | 4 | >99 | 754 | 1 | 7 | 52 | 91 |
| 8 | 5 | >99 | 99 | 1 | 13 | 98 | 99 |
| 9 | 4 | 87 | 851 | 1 | 7 | 40 | 84 |
| 10 | 6 | >99 | 768 | 1 | 7 | 48 | 91 |
| 11 | 4 | >99 | 98 | 1 | 14 | 96 | 94 |
| 12 | 5 | 87 | 600 | 1 | 6 | 40 | 85 |
| Vergleich 1 | 16 | 92 | 1026 | 2 | 7 | 41 | 80 |
| Vergleich 2 | 12 | 70 | 2679 | 3 | 3 | 30 | 61 |
| Vergleich 3 | 12 | 67 | 3390 | 3 | 3 | 25 | 56 |
| Vergleich 4 | 15 | 70 | 324 | 3 | 7 | 70 | 68 |

| | | | | | | | |
|---|---|---|---|---|---|---|---|
| Umsatz nach NMR in %; Viskosität in mPas; Rub-off (Note 1 bis 3); Trennwerte (TW) mit zwei Klebstoffen in cN/2,5 cm nach 24 Stunden 40°C Lagerung; Restklebkraft (KUR) in %. | | | | | | | |

Aus Tabelle 1 sind die Vorteile der Erfindung klar ersichtlich. So weisen die nicht erfindungsgemäßen Vergleichsbeispiele 1 bis 4 eine erhöhte Viskosität gegenüber den Synthesebeispielen auf. Dieses lässt sich an den Synthesebeispielen 8 und 11 mit jeweils einer Viskosität von 99 bzw. 98 mPa*s und dem dazugehörigen Vergleichsbeispiel mit einer Viskosität von 324 mPa*s deutlich belegen. Neben der nachteilig erhöhten Viskosität weist das Produkt aus Vergleichsbeispiel 4 eine wesentlich erhöhte Reaktionsdauer und einen unvollständigen Umsatz auf, was zu schlechten Trennwerten und Restklebkräften führt. Synthesebeispiele 7, 9, 10 und 12 mit den dazugehörigen Vergleichsbeispielen 1, 2 und 3 beschreiben ein ähnliches Bild. Während die Synthesebeispiele eine Viskosität von etwa 600 bis 900 mPa*s und einen vollständigen Umsatz nach etwa 4 bis 6 Stunden, sind es bei den Vergleichsbeispielen 1000 bis etwa 3400 mPa*s bei Reaktionszeiten von 12 bis 16 Stunden mit schlechten Umsätzen, die zu schlechten Trennwerten und Restklebkräften führen. Auch die Rub-off Werte spiegeln die schlechten Umsätze der Vergleichsbeispiele wider. Die Umsätze der Synthesebeispiele 9 und 12 sind als Absolutwerte zu verstehen. Bezogen auf die reduzierte Einsatzmenge an Säure entsprechen die Werte einem Umsatz von etwa 97 %.

## Patentansprüche

1. Verfahren zur Herstellung von Polymermassen (P), vorzugsweise Polysiloxanen mit mindestens einer Carbonsäureestergruppe, insbesondere (meth)acrylattragenden Polysiloxanen, wobei mindestens ein Epoxygruppen-tragendes Polymer mit einer oder mehreren Carbonsäuren umgesetzt wird, **dadurch gekennzeichnet, dass** das Verfahren in Gegenwart von Umsetzungsprodukten (U) aus (A) und (B) durchgeführt wird, wobei (A) Metallsalze sind und (B) ein Reaktionsprodukt aus Aldehyden und primären Aminen ist, wobei die Metallsalze (A) Chromsalze umfassen.

2. Verfahren nach Anspruch 1, **dadurch gekennzeichnet, dass** zur Herstellung der Polymermassen (P) mindestens ein Epoxygruppen-tragendes Polymer, vorzugsweise Polysiloxan, mit einer oder mehreren Carbonsäuren umfassend Acryl- und/oder Methacrylsäure und/oder andere Monocarbonsäuren, welche frei von zur Polymerisation befähigten Doppelbindungen sind, umgesetzt wird.

3. Verfahren nach Anspruch 2, **dadurch gekennzeichnet, dass** ein Verhältnis von Epoxygruppen zu Carbonsäuren von 1:0,5-2, bevorzugt 1:0,6-1,8, besonders bevorzugt 1:0,8-1,5 vorliegt.

4. Verfahren nach einem der Ansprüche 1 bis 3, **dadurch gekennzeichnet, dass** die Metallsalze (A) Chrom (III) acetat umfassen.

5. Verfahren nach einem der Ansprüche 1 bis 4, **dadurch gekennzeichnet, dass** als Aldehyde aliphatische und/oder aromatische Aldehyde eingesetzt werden, vorzugsweise aromatische Aldehyde, bevorzugt Phenolgruppen-tragende Aldehyde, insbesondere Salicylaldehyd.

6. Verfahren nach einem der Ansprüche 1 bis 5, **dadurch gekennzeichnet, dass** als primäre Amine substituiertes oder unsubstituiertes C₁-C₃₀-Alkylamin, substituiertes oder unsubstituiertes C₁-C₃₀-Alkylamin mit einer und/oder mehreren Dreifachbindungen, substituiertes oder unsubstituiertes C₁-C₃₀-Alkylamin mit einer und/oder mehreren Doppelbindungen, substituiertes oder unsubstituiertes C₆-C₃₀-Arylamin, substituiertes oder unsubstituiertes C₆-C₃₀-Heteroarylamin, substituiertes oder unsubstituiertes C₁-C₁₂-Alkyl-C₆-C₁₂-Arylamin, substituiertes oder unsubstituiertes C₁-C₃₀-Alkyloxyamin, substituiertes oder unsubstituiertes cyclisches C₃-C₃₀-Alkylamin, vorzugsweise Fettamine und Fettalkoholamine, insbesondere bevorzugt primäre Fettalkoholamine, die aus gesättigten oder ungesättigten Fettalkoholen und Addition an Acrylnitril und anschließender Hydrierung zugänglich sind, eingesetzt werden.

7. Verfahren nach einem der Ansprüche 1 bis 6, **dadurch gekennzeichnet, dass** das Umsetzungsprodukt (U) in Mengen von 0,0001 Gew.-% bis 5 Gew.-%, bevorzugt 0,001 bis 1 Gew.-%, insbesondere 0,01 bis 0,5 Gew.-% eingesetzt wird, bezogen auf die gesamte Polymermasse (P).

8. Verfahren nach einem der Ansprüche 1 bis 7, **dadurch gekennzeichnet, dass** es bei einer Temperatur von 10 bis 200 °C, vorzugsweise von 40 bis 150 °C, bevorzugt von 80 bis 140 °C, und/oder
bei einem Druck von 0,5 bis 20 bar, bevorzugt 1 bis 5 bar, insbesondere bevorzugt bei Normaldruck, durchgeführt wird.

9. Verfahren nach einem der Ansprüche 1 bis 8, **dadurch gekennzeichnet, dass** es in Gegenwart oder in Abwesenheit eines Lösemittels, wie vorzugsweise Propanol, Butanol, Glykol, modifizierte Glykole, Methylisobutylketon, Ethylacetat, Butylacetat, Toluol, Xylol und Isomere, durchgeführt wird, wobei vorteilhafterweise nur geringe Mengen an Lösemittel eingesetzt werden, wie vorzugsweise <20 Gew-%, bevorzugt <10 Gew.%, insbesondere bevorzugt <5 Gew.% Lösemittel, bezogen auf die gesamte Reaktionsmischung.

10. Polymer, vorzugsweise härtbares Polymer, insbesondere härtbares (meth)acrylattragendes Polysiloxan, hergestellt nach einem Verfahren gemäß einem der Ansprüche 1 bis 9.

11. Umsetzungsprodukt, **dadurch gekennzeichnet, dass** es durch Umsetzung von Chromsalzen, vorzugsweise Chrom (III) salzen, insbesondere Chrom (III) acetat und einem Reaktionsprodukt aus Aldehyden und Fettaminen gebildet ist.

12. Verwendung eines Umsetzungsproduktes nach Anspruch 11 als Katalysator bei der Herstellung von Polymer, vorzugsweise härtbarem Polymer, insbesondere härtbarem (meth)acrylattragendem Siloxan, bei einem Verfahren zur Herstellung von Polymer gemäß einem der Ansprüche 1 bis 9.

13. Verwendung der Polymeren, vorzugsweise härtbarem Polymer, insbesondere härtbarem (meth)acrylattragendem Polysiloxan gemäß Anspruch 10 oder herstellbar nach einem oder mehreren der Ansprüche 1 bis 9, als Trennbeschichtung allein oder in Mischung mit weiteren Additiven wie vorzugsweise Härtungsinitiatoren, Füllstoffen, Pigmenten, anderen Siloxanen und/oder Acrylatsystemen und/oder weiteren Zusatzstoffen, insbesondere in Mischung mit weiteren acrylierten Siliconen.

14. Verfahren zum Beschichten von flächigen Trägern durch Auftragung von härtbarem Polymer, insbesondere härtbarem (meth)acrylattragendem Polysiloxan, gemäß Anspruch 10 oder herstellbar nach einem oder mehreren der Ansprüche 1 bis 9.

15. Strahlenhärtende Beschichtungsmassen, **dadurch gekennzeichnet, dass** sie umfassen
(i) Polymer, insbesondere (meth)acrylattragendes Polysiloxan gemäß Anspruch 10 oder herstellbar nach einem oder mehreren der Ansprüche 1 bis 9,
(ii) sowie Zusätze,
wobei die Zusätze ausgewählt sind aus Photoinitiatoren, Photosensibilisatoren, Füllstoffen, Pigmenten, Lösemittel, phosphorhaltige Verbindungen welche unter UV-Licht polymerisieren, Stabilisatoren z.B. Phosphite oder sterisch gehinderte Amine (hindered amine light stabilizer, HALS), Anti-Misting-Additive und Amin-Synergisten,
insbesondere in Mischung mit weiteren acrylierten Siliconen.

## Claims

1. Process for producing polymer materials (P), preferably polysiloxanes having at least one carboxylic ester group, in particular (meth)acrylate-bearing polysiloxanes, wherein at least one epoxy-bearing polymer is converted with one or more carboxylic acids, **characterized in that** the process is carried out in the presence of conversion products (C) of (A) and (B), wherein (A) are metal salts and (B) is a reaction product of aldehydes and primary amines, wherein the metal salts (A) comprise chromium salts.

2. Process according to Claim 1, **characterized in that** to produce the polymer materials (P) at least one epoxy-bearing polymer, preferably polysiloxane, is converted with one or more carboxylic acids comprising acrylic and/or methacrylic acid and/or other monocarboxylic acids, which are free of double bonds capable of polymerization.

3. Process according to Claim 2, **characterized in that** a ratio of epoxy groups to carboxylic acids of 1:0.5-2, preferably 1:0.6-1.8, particularly preferably 1:0.8-1.5, is present.

4. Process according to any of Claims 1 to 3, **characterized in that** the metal salts (A) comprise chromium(III) acetate.

5. Process according to any of Claims 1 to 4, **characterized in that** the aldehydes employed are aliphatic and/or aromatic aldehydes, preferably aromatic aldehydes, by preference phenol-bearing aldehydes, in particular salicylaldehyde.

6. Process according to any of Claims 1 to 5, **characterized in that** the primary amines employed are substituted or unsubstituted C₁-C₃₀-alkylamine, substituted or unsubstituted C₁-C₃₀-alkylamine having one and/or more triple bonds, substituted or unsubstituted C₁-C₃₀-alkylamine having one and/or more double bonds, substituted or unsubstituted C₆-C₃₀-arylamine, substituted or unsubstituted C₆-C₃₀-heteroarylamine, substituted or unsubstituted C₁-C₁₂-alkyl- C₆-C₁₂-arylamine, substituted or unsubstituted C₁-C₃₀-alkyloxyamine, substituted or unsubstituted cyclic C₃-C₃₀-alkylamine, preferably fatty amines and fatty alcohol amines, especially preferably primary fatty alcohol amines, obtainable from saturated or unsaturated fatty alcohols and addition onto acrylonitrile and subsequent hydrogenation.

7. Process according to any of Claims 1 to 6, **characterized in that** the conversion product (C) is employed in amounts of 0.0001 wt% to 5 wt%, preferably 0.001 to 1 wt%, in particular 0.01 to 0.5 wt% based on the entirety of the polymer material (P).

8. Process according to any of Claims 1 to 7, **characterized in that** it is carried out at a temperature of 10°C to 200°C, preferably of 40°C to 150°C, by preference of 80°C to 140°C
and/or
at a pressure of 0.5 to 20 bar, preferably 1 to 5 bar, especially preferably at atmospheric pressure.

9. Process according to any of Claims 1 to 8, **characterized in that** it is carried out in the presence or in the absence of a solvent such as preferably propanol, butanol, glycol, modified glycols, methyl isobutyl ketone, ethyl acetate, butyl acetate, toluene, xylene and isomers of xylene, wherein advantageously only small amounts of solvent are employed, such as preferably <20 wt%, preferably <10 wt%, especially preferably <5 wt% of solvent based on the entirety of the reaction mixture.

10. Polymer, preferably curable polymer, in particular curable (meth)acrylate-bearing polysiloxane, produced by a process according to any of Claims 1 to 9.

11. Conversion product, **characterized in that** it is formed by conversion of chromium salts, preferably chromium(III) salts, in particular chromium(III) acetate, and a reaction product of aldehydes and fatty amines.

12. Use of a conversion product according to Claim 11 as catalyst in the production of polymer, preferably curable polymer, in particular curable (meth)acrylate-bearing siloxane, in a process for producing polymer according to any of Claims 1 to 9.

13. Use of the polymers, preferably curable polymer, in particular curable (meth)acrylate-bearing polysiloxane according to Claim 10 or producible according to one or more of Claims 1 to 9 as a release coating alone or in admixture with further additives such as, preferably, curing initiators, fillers, pigments, other siloxanes and/or acrylate systems and/or further added substances, in particular in admixture with further acrylated silicones.

14. Process for coating sheetlike carriers by application of curable polymer, in particular curable (meth)acrylate-bearing polysiloxane, according to Claim 10 or producible according to one or more of Claims 1 to 9.

15. Radiation-curing coating materials, **characterized in that** they comprise
(i) polymer, in particular (meth)acrylate-bearing polysiloxane according to Claim 10 or producible according to one or more of Claims 1 to 9,
(ii) and additions,
wherein the additions are selected from photoinitiators, photosensitizers, fillers, pigments, solvents, phosphorus-containing compounds which polymerize under UV light, stabilizers, e.g. phosphites or hindered amine light stabilizers (HALS), anti-misting additives and amine synergists,
in particular in admixture with further acrylated silicones.

## Revendications

1. Procédé de fabrication de matériaux polymères (P), de préférence de polysiloxanes contenant au moins un groupe ester d'acide carboxylique, notamment de polysiloxanes portant des groupes (méth)acrylate, selon lequel au moins un polymère portant des groupes époxy est mis en réaction avec un ou plusieurs acides carboxyliques, **caractérisé en ce que** le procédé est réalisé en présence de produits de réaction (U) de (A) et (B), (A) étant des sels de métaux et (B) étant un produit de réaction d'aldéhydes et d'amines primaires, les sels de métaux (A) comprenant des sels de chrome.

2. Procédé selon la revendication 1, **caractérisé en ce que**, pour la fabrication des matériaux polymères (P), au moins un polymère portant des groupes époxy, de préférence un polysiloxane, est mis en réaction avec un ou plusieurs acides carboxyliques, comprenant l'acide acrylique et/ou méthacrylique et/ou d'autres acides monocarboxyliques, qui sont exempts de doubles liaisons aptes à la polymérisation.

3. Procédé selon la revendication 2, **caractérisé en ce qu'**un rapport entre les groupes époxy et les acides carboxyliques de 1:0,5 à 2, de préférence de 1:0,6 à 1,8, de manière particulièrement préférée de 1:0,8 à 1,5, est présent.

4. Procédé selon l'une quelconque des revendications 1 à 3, **caractérisé en ce que** les sels de métaux (A) comprennent de l'acétate de chrome (III).

5. Procédé selon l'une quelconque des revendications 1 à 4, **caractérisé en ce que** des aldéhydes aliphatiques et/ou aromatiques sont utilisés en tant qu'aldéhydes, de préférence des aldéhydes aromatiques, de préférence des aldéhydes portant des groupes phénol, notamment l'aldéhyde salicylique.

6. Procédé selon l'une quelconque des revendications 1 à 5, **caractérisé en ce qu'**une alkylamine en C₁-C₃₀ substituée ou non substituée, une alkylamine en C₁-C₃₀ substituée ou non substituée contenant une et/ou plusieurs triples liaisons, une alkylamine en C₁-C₃₀ substituée ou non substituée contenant une et/ou plusieurs doubles liaisons, une arylamine en C₆-C₃₀ substituée ou non substituée, une hétéroarylamine en C₆-C₃₀ substituée ou non substituée, une alkyle en C₁-C₁₂-arylamine en C₆-C₁₂ substituée ou non substituée, une alkyloxyamine en C₁-C₃₀ substituée ou non substituée, une alkylamine en C₃-C₃₀ cyclique substituée ou non substituée, de préférence des amines grasses et des alcool-amines grasses, de manière particulièrement préférée des alcool-amines grasses primaires, qui peuvent être obtenues à partir d'alcools gras saturés ou insaturés et par addition sur de l'acrylonitrile, puis hydrogénation, sont utilisées en tant qu'amines primaires.

7. Procédé selon l'une quelconque des revendications 1 à 6, **caractérisé en ce que** le produit de réaction (U) est utilisé en quantités de 0,0001 % en poids à 5 % en poids, de préférence de 0,001 à 1 % en poids, notamment de 0,01 à 0,5 % en poids, par rapport au matériau polymère total (P).

8. Procédé selon l'une quelconque des revendications 1 à 7, **caractérisé en ce qu'**il est réalisé à une température de 10 à 200 °C, de préférence de 40 à 150 °C, de préférence de 80 à 140 °C, et/ou à une pression de 0,5 à 20 bar, de préférence de 1 à 5 bar, de manière particulièrement préférée à pression normale.

9. Procédé selon l'une quelconque des revendications 1 à 8, **caractérisé en ce qu'**il est réalisé en présence ou en absence d'un solvant, tel que de préférence le propanol, le butanol, le glycol, les glycols modifiés, la méthylisobutylcétone, l'acétate d'éthyle, l'acétate de butyle, le toluène, le xylène et les isomères, seules de petites quantités de solvant étant avantageusement utilisées, tel que de préférence < 20 % en poids, de préférence < 10 % en poids, de manière particulièrement préférée < 5 % en poids de solvant, par rapport au mélange réactionnel total.

10. Polymère, de préférence polymère durcissable, notamment polysiloxane portant des groupes (méth)acrylate durcissable, fabriqué par un procédé selon l'une quelconque des revendications 1 à 9.

11. Produit de réaction, **caractérisé en ce qu'**il est formé par mise en réaction de sels de chrome, de préférence de sels de chrome (III), notamment d'acétate de chrome (III), et d'un produit de réaction d'aldéhydes et d'amines grasses.

12. Utilisation d'un produit de réaction selon la revendication 11 en tant que catalyseur lors de la fabrication d'un polymère, de préférence d'un polymère durcissable, notamment d'un siloxane portant des groupes (méth)acrylate durcissable, dans un procédé de fabrication d'un polymère selon l'une quelconque des revendications 1 à 9.

13. Utilisation de polymères, de préférence d'un polymère durcissable, notamment d'un polysiloxane portant des groupes (méth)acrylate durcissable selon la revendication 10 ou pouvant être fabriqué selon une ou plusieurs des revendications 1 à 9, en tant que revêtement anti-adhérent seul ou en mélange avec d'autres additifs tels que de préférence des initiateurs de durcissement, des charges, des pigments, d'autres siloxanes et/ou des systèmes d'acrylate et/ou d'autres additifs, notamment en mélange avec d'autres silicones acrylées.

14. Procédé de revêtement de supports plats par application d'un polymère durcissable, notamment d'un polysiloxane portant des groupes (méth)acrylate durcissable selon la revendication 10 ou pouvant être fabriqué selon une ou plusieurs des revendications 1 à 9.

15. Matériaux de revêtement durcissables par rayonnement, **caractérisés en ce qu'**ils comprennent :
(i) un polymère, notamment un polysiloxane portant des groupes (méth)acrylate, selon la revendication 10 ou pouvant être fabriqué selon une ou plusieurs des revendications 1 à 9,
(ii) et des additifs,
les additifs étant choisis parmi les photoinitiateurs, les photosensibilisateurs, les charges, les pigments, les solvants, les composés contenant du phosphore qui polymérisent sous lumière UV, les stabilisateurs, p. ex. les phosphites ou les amines à encombrement stérique (hindered amine light stabilizer, HALS), les additifs anti-vaporisation et les synergistes aminés, notamment en mélange avec d'autres silicones acrylées.
